# EUROPÄISCHE PATENTSCHRIFT

(11) **EP 1 952 037 B1**
(45) Veröffentlichungstag und Bekanntmachung des Hinweises auf die Patenterteilung: **21.08.2013**
(21) Anmeldenummer: 06807762.7
(22) Anmeldetag: 07.11.2006
(51) Int. Cl.: F16C 29/06, C08F 214/26

(54) **LINEARWÄLZLAGER**
LINEAR ROLLER BEARING
PALIER A ROULEMENT LINEAIRE

(30) Priorität: 15.11.2005 DE 102005054371
(43) Veröffentlichungstag der Anmeldung: 06.08.2008
(73) Patentinhaber: Schaeffler Technologies AG & Co. KG, 91074 Herzogenaurach (DE)
(72) Erfinder: RUDY, Dietmar, 66501 Kleinbundenbach (DE)
(86) Internationale Anmeldenummer: PCT/EP2006/068161
(87) Internationale Veröffentlichungsnummer: WO 2007/057319

(56) Entgegenhaltungen:
- EP-A2- 0 133 357
- EP-A2- 0 875 684
- EP-A2- 1 323 750
- US-A- 5 397 839

## Beschreibung

### Gebiet der Erfindung

Die vorliegende Erfindung betrifft ein Linearwälzlager, dessen Führungswagen auf einer Führungsschiene längsverschieblich angeordnet werden kann.

Aus EP 0 875 684 A2 beispielsweise ist ein Linearwälzlager bekannt geworden, bei dem ein Führungswagen auf einer Führungsschiene längsverschieblich angeordnet ist. In dem Führungswagen sind endlose Wälzkörperkanäle vorgesehen, in dem Wälzkörper endlos umlaufen können. Der endlose Wälzkörperkanal weist einen Lastabschnitt, einen Rücklaufabschnitt und zwei den Lastabschnitt mit dem Rücklaufabschnitt endlos verbindende Umlenkabschnitte auf. Auf diese Weise ist eine unbegrenzte Verschiebung des Führungswagens entlang der Führungsschiene möglich. Mehrere Teile des Führungswagens sind aus Kunststoff gebildet, bei dem ein so genanntes "corner crack" vermieden ist, und der eine lange Lebensdauer hat. In diesem Dokument wird als bevorzugter Kunststoff beispielsweise ein faserverstärktes Polybutylene Terephthalate (PBT) vorgeschlagen, das diesen Forderungen genügt.

Ferner sind Linearwälzlager bekannt geworden, bei denen Teile des Führungswagens aus faserverstärktem Polyamid hergestellt werden.

Insbesondere die Umlenkabschnitte des endlosen Wälzkörperkanals werden üblicherweise aus sehr verschleißfesten und dehnungsarmen Kunststoffmaterialien hergestellt. Bei großen Verfahrgeschwindigkeiten des Führungswagens (> 6 m/sec) üben die üblicherweise aus Stahl gebildeten Wälzkörper erhebliche Fliehkräfte in den Umlenkabschnitten insbesondere auf die Außenumlenkung aus. Unter den wirkenden Fliehkräften treten Stoßkontakte der Wälzkörper mit den Umlenkabschnitten auf. Diese Stoßkontakte erhöhen unerwünschten Verschleiß in den Umlenkabschnitten. Die Fliehkräfte können dadurch reduziert werden, dass die Wälzkörper nicht aus Stahl, sondern aus keramischem Werkstoff gebildet sind. Aufgrund des geringeren spezifischen Gewichtes von Keramik üben die keramischen Wälzkörper deutlich reduzierte Fliehkräfte auf die Außenumlenkung auf. Nachteilig bei diesen Linearwälzlagern ist, dass derartige Hybridführungen sehr teuer sind.

Aufgabe der vorliegenden Erfindung ist es, ein Linearwälzlager nach den Merkmalen des Oberbegriffs des Anspruchs 1 einzugeben, das insbesondere für hohe Verfahrgeschwindigkeiten des Führungswagens geeignet ist.

Erfindungsgemäß wird diese Aufgabe dadurch gelöst, dass die Außenumlenkung aus einem Kunststoff gebildet ist, dessen Nachgiebigkeit durch einen aus dem Verhältnis von Bruchdehnung zu Bruchspannung ermittelten Quotienten angegeben ist, der vom Betrag her größer als 0,15 ist, wobei die Bruchdehnung in Prozent und die Bruchspannung in Megapascal angegeben sind: die Werte für Bruchdehnung und Bruchspannung beziehen sich auf Herstellerangaben, die üblicherweise der ISO 527-1/-2 entsprechen.

In Abkehr von der etablierten Praxis, harte und verschleißfeste Kunststoff insbesondere für den Umlenkbereich einzusetzen, wird mit der Erfindung ein völlig anderer Weg beschritten. Der erfindungsgemäß vorgeschlagene Kunststoff ist deutlich weicher oder nachgiebiger als die für diesen Verwendungszweck bislang verwendeten Kunststoffe. Mit der Erfindung wird ein neuer Weg bei der Auswahl von Kunststoffen insbesondere für die Fertigung der Umlenkabschnitte vorgeschlagen.

Laufversuche unter Hochgeschwindigkeitsbedingungen haben gezeigt, dass solche Werkstoffe aufgrund des vergleichsweise gummiartigen Werkstoffverhaltens Schläge der auftreffenden Wälzkörper insbesondere im Umlenkbereich abdämpfen, ohne dass mit dieser Dämpfung nennenswerter Verschleiß einhergeht. Trotz einer möglicherweise reduzierten Zugfestigkeit des weicheren Werkstoffes hat sich herausgestellt, dass der Verschleiß insbesondere in der Umlenkung gegenüber bekannten Führungswagen deutlich reduziert ist. Die Gebrauchsdauer erfindungsgemäßer Linearwälzlager ist gegenüber bekannten Linearwälzlagern bei Hochgeschwindigkeitsanwendungen deutlich gesteigert.

Während der oben angegebene Nachgiebigkeitswert von 0,15 eine untere Grenze der Nachgiebigkeit bestimmt, ist eine obere Grenze der Nachgiebigkeit dadurch festgelegt, dass keine plastischen Verformungen insbesondere der Außenumlenkung aufgrund der wirksamen Fliehkräfte eintreten.

Gute Ergebnisse wurden mit dem thermoplastischen Polyester Hytrel 5555HS der Firma DuPont erzielt. Dieser Kunststoff wird vom Hersteller angegeben mit einer Bruchspannung von ca. 42 Mpa und einer Bruchdehnung von etwa 520 %. Hier ergibt sich ein Quotient von etwa 12,3. Bei diesem erfindungsgemäß besonders geeigneten Werkstoff wird deutlich, dass die Bruchdehnung gegenüber bekannten - für die Fertigung von Umlenkabschnitten vorgesehenen - Kunststoffen sehr viel größer ist. Beispielsweise bei faserverstärktem PBT liegt die Bruchdehnung etwa bei 3 %.

Gute Versuchsergebnisse wurden mit Kunststoffen erzielt, deren Bruchspannung < als 60 Mpa beträgt. Ebenso gute Ergebnisse wurden mit Kunststoffen beobachtet, deren Bruchdehnung > als 10 % vorzugsweise > als 100 % beträgt. Insbesondere Kunststoffe, deren Bruchspannung < als 60 Mpa und deren Bruchdehnung > als 100 % betragen, zeigen hervorragende Eigenschaften, die Fliehkräfte der Wälzkörper im Umlenkbereich aufzufangen, ohne dass ein nennenswerter Verschleiß an den Umlenkbahnen des Umlenkabschnitts festzustellen ist.

In bekannter Weise kann das Kopfstück mit der Außenumlenkung des Umlenkabschnittes einstückig ausgebildet sein. Das Kopfstück mit der einstückig angeformten Außenumlenkung kann dann in günstiger Weise aus dem erfindungsgemäß vorgeschlagenen Kunststoff gebildet sein.

Ebenso wie die Außenumlenkung kann auch die Innenumlenkung des Umlenkabschnittes aus diesem Kunststoff gebildet sein.

Für den Rücklaufkanal kann ein anderer Kunststoff verwendet werden, beispielsweise ein faserverstärkter Polyamidwerkstoff. Dessen Nachgiebigkeit kann auch < als 0,15 sein.

Nachstehend wird die Erfindung anhand eines in drei Figuren abgebildeten Ausführungsbeispieles näher erläutert. Es zeigen:
- Figur 1: ein erfindungsgemäßes Linearwälzlager in perspektivischer Darstellung,
- Figur 2: eine Ausschnittvergrößerung dieses erfindungsgemäßen Linearwälzlagers, teilweise geschnitten und
- Figur 3: in schematischer Darstellung einen Längsschnitt durch das erfindungsgemäße Linearwälzlager.

### Ausführliche Beschreibung der Zeichnungen

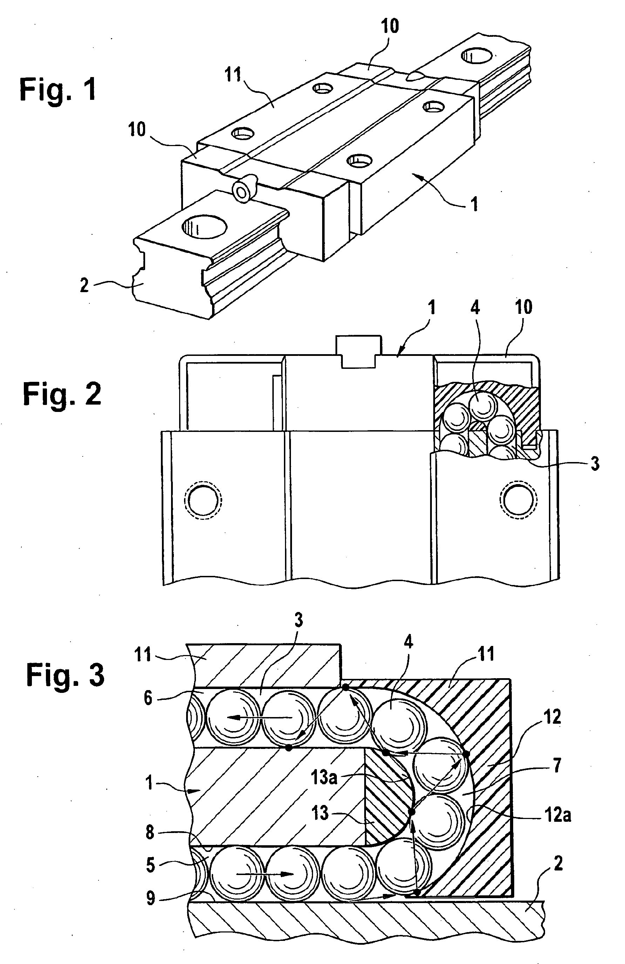

Bei dem in den Figuren 1 bis 3 abgebildeten erfindungsgemäßen Linearwälzlager ist ein Führungswagen 1 auf einer Führungsschiene 2 längsverschieblich angeordnet. Der Führungswagen 1 ist mit einem endlosen Wälzkörperkanal 3 versehen, in dem als Wälzkörper 4 vorgesehene Kugeln endlos umlaufen. Der Wälzkörperkanal 3 weist einen Lastabschnitt 5, einen Rücklaufabschnitt 6 und zwei den Lastabschnitt 5 mit dem Rücklaufabschnitt 6 endlos verbindende Umlenkabschnitte 7 auf.

Im Lastabschnitt 5 wälzen die Wälzkörper 4 an Laufbahnen 8, 9 des Führungswagens 1 und der Führungsschiene 2 ab.

Der Umlenkabschnitt 7 ist im Bereich eines Kopfstück 10 ausgebildet, das stirnseitig an einen Tragkörper 11 des Führungswagens 1 angeordnet ist. Das Kopfstück 10 ist aus Kunststoff gebildet.

Der Umlenkabschnitt 7 umfasst eine Außenumlenkung 12 und eine Innenumlenkung 13. Die Außenumlenkung 12 ist einstückig mit dem Kopfstück 10 hergestellt. Die Innenumlenkung 13 ist durch ein separates Kunststoffteil gebildet, dass ebenfalls stirnseitig an dem Tragkörper 11 des Führungswagens 1 gehalten ist. Zwischen der Außenumlenkung 12 und der Innenumlenkung 13 werden die Wälzkörper 4 an einer äußeren Umlenkbahn 12a der Außenumlenkung 12 und an einer inneren Umlenkbahn 13a der Innenumlenkung 13 umgelenkt.

Insbesondere bei hohen Verfahrgeschwindigkeiten des Führungswagens 1 kann es zu erheblichen Stoßkontakten der Wälzkörper 4 mit den Begrenzungen des endlosen Wälzkörperkanals 3 kommen. In der Figur 3 sind durch schwarze Punkte Stoßkontakte dargestellt. Insbesondere im Umlenkabschnitt 7 kommt es zu zahlreichen ausgeprägten Stoßkontakten aufgrund erheblicher Fliehkräfte der schnell umlaufenden Wälzkörper 4.

Das Kopfstück 10 mit der einstückig angeformten Außenumlenkung 12 und die Innenumlenkung 13 sind aus dem Kunststoff Hytrel 5555HS hergestellt. Dieser Kunststoff hat nach Angaben des Herstellers DuPont eine Bruchdehnung von ca. 520 % und ein Bruchspannung von ca. 42 Mpa. Dieser Kunststoff hat eine gute Nachgiebigkeit die gebildet ist aus dem Verhältnis von Bruchdehnung zu Bruchspannung, wobei der daraus gebildete Quotient vom Betrag her etwa den Wert 12,3 annimmt. Die Bruchdehnung wird zu diesem Zweck in Prozent und die Bruchspannung in Megapascal angegeben.

Die Wälzkörper 4 stoßen aufgrund der großen Fliehkräfte mit einer großen Stoßkraft auf die Innenumlenkung 13 sowie die Außenumlenkung 12. Mit dem erfindungsgemäß vorgeschlagenen Kunststoff werden diese Stöße hervorragend gedämpft, ohne dass ein erkennbarer Verschleiß an dem Kopfstück 10 oder an der Innenumlenkung 13 zu beobachten ist. Die große Bruchdehnung verhilft dem Werkstoff zu einer hier als Nachgiebigkeit bezeichneten Fähigkeit, diese Stoßkräfte zu dämpfen.

### Bezugszahlenliste

- 1: Führungswagen
- 2: Führungsschiene
- 3: endloser Wälzkörperkanal
- 4: Wälzkörper
- 5: Lastabschnitt
- 6: Rücklaufabschnitt
- 7: Umlenkabschnitt
- 8: Laufbahn
- 9: Laufbahn
- 10: Kopfstück
- 11: Tragkörper
- 12: Außenumlenkung
- 12a: äußere Umlenkbahn
- 13: Innenumlenkung
- 13a: innere Umlenkbahn

## Patentansprüche

1. Linearwälzlager, mit einem auf einer Führungsschiene (2) längsverschieblich vorsehbaren Führungswagen (1), in dem Wälzkörper (4) in einem endlosen Wälzkörperkanal (3) endlos umlaufen, der einen Lastabschnitt (5) und einen Rücklaufabschnitt (6) und den Lastabschnitt (5) mit dem Rücklaufabschnitt (6) endlos verbindende Umlenkabschnitte (7) aufweist, die jeweils an einem Kopfstück (10) des Führungswagens (1) vorgesehen sind und jeweils eine Außenumlenkung (12) für die Umlenkung der Wälzkörper (4) aufweisen, **dadurch gekennzeichnet, dass** die Außenumlenkung (12) aus einem Kunststoff gebildet ist, dessen Nachgiebigkeit durch einen aus dem Verhältnis von Bruchdehnung zu Bruchspannung ermittelten Quotienten angegeben ist, der vom Betrag her größer als 0,15 ist, wobei die Bruchdehnung in Prozent und die Bruchspannung in Megapascal angegeben sind.

2. Linearwälzlager nach Anspruch 1, bei dem die Nachgiebigkeit vom Betrag her größer als 10 ist.

3. Linearwälzlager nach Anspruch 1, bei dem die Bruchspannung des Kunststoffes kleiner als 60 Megapascal ist.

4. Linearwälzlager nach Anspruch 1, bei dem die Bruchdehnung des Kunststoffes größer als 10 Prozent, vorzugsweise größer als 100% ist.

5. Linearwälzlager nach Anspruch 1, bei dem das Kopfstück (10) mit der einstückig angeformten Außenumlenkung (12) aus diesem Kunststoff gebildet ist.

6. Linearwälzlager nach Anspruch 1, bei dem der Umlenkabschnitt (7) eine Innenumlenkung (13) umfasst, zwischen der und der Außenumlenkung (12) die Wälzkörper (4) angeordnet sind, wobei die Innenumlenkung (13) aus diesem Kunststoff gebildet ist.

## Claims

1. Linear rolling bearing, having a guide carriage (1) which can be provided so as to be longitudinally movable on a guide rail (2) and in which rolling bodies (4) circulate in an endless rolling body channel (3) which has a load section (5) and a return section (6) and deflecting sections (7) which connect the load section (5) to the return section (6) in an endless fashion and which are in each case provided on a head piece (10) of the guide carriage (1) and have in each case one outer deflection (12) for the deflection of the rolling bodies (4), **characterized in that** the outer deflection (12) is formed from a plastic whose flexibility is specified by a quotient determined from the ratio of fracture strain to fracture stress, which quotient is greater than 0.15 in magnitude, with the fracture strain being specified in percent and the fracture stress being specified in megapascals.

2. Linear rolling bearing according to Claim 1, in which the flexibility is greater than 10 in magnitude.

3. Linear rolling bearing according to Claim 1, in which the fracture stress of the plastic is less than 60 megapascals.

4. Linear rolling bearing according to Claim 1, in which the fracture strain of the plastic is greater than 10 percent, preferably greater than 100%.

5. Linear rolling bearing according to Claim 1, in which the head piece (10) with the integrally formed outer deflection (12) is formed from said plastic.

6. Linear rolling bearing according to Claim 1, in which the deflecting section (7) comprises an inner deflection (13) between which and the outer deflection (12) the rolling bodies (4) are arranged, with the inner deflection (13) being formed from said plastic.

## Revendications

1. Palier à roulement linéaire, comprenant un chariot de guidage (1) pouvant être prévu de manière déplaçable longitudinalement sur un rail de guidage (2), dans lequel chariot de guidage des corps de roulement (4) circulent en continu dans un canal de corps de roulement sans fin (3), lequel canal de corps de roulement comprend une partie de charge (5) et une partie de retour (6) ainsi que des parties de déviation (7) reliant de manière continue la partie de charge (5) à la partie de retour (6), lesquelles parties de déviation sont prévues sur une pièce de tête respective (10) du chariot de guidage (1) et comprennent une déviation externe respective (12) pour la déviation des corps de roulement (4), **caractérisé en ce que** la déviation externe (12) est formée à partir d'un plastique dont la flexibilité est indiquée par un quotient, déterminé à partir du rapport de l'allongement à la rupture sur la tension à la rupture, qui est supérieur à 0,15 en valeur absolue, l'allongement à la rupture étant indiqué en pour cent et la tension à la rupture étant indiquée en mégapascals.

2. Palier à roulement linéaire selon la revendication 1, dans lequel la flexibilité est supérieure à 10 en valeur absolue.

3. Palier à roulement linéaire selon la revendication 1, dans lequel la tension à la rupture du plastique est inférieure à 60 mégapascals.

4. Palier à roulement linéaire selon la revendication 1, dans lequel l'allongement à la rupture du plastique est supérieur à 10 pour cent, de préférence supérieur à 100 %.

5. Palier à roulement linéaire selon la revendication 1, dans lequel la pièce de tête (10) comprenant la déviation externe (12) formée d'un seul tenant est formée à partir de ce plastique.

6. Palier à roulement linéaire selon la revendication 1, dans lequel la partie de déviation (7) comporte une déviation interne (13) entre laquelle et la déviation externe (12) sont disposés les corps de roulement (4), la déviation interne (13) étant formée à partir de ce plastique.
